# FASCICULE DE BREVET EUROPEEN

(11) **EP 2 489 548 B1**
(45) Date de publication et mention de la délivrance du brevet: **06.09.2017**
(21) Numéro de dépôt: 12155837.3
(22) Date de dépôt: 16.02.2012
(51) Int. Cl.: B60Q 1/08

(54) **Procédé et dispositif de commande de commutation du système d'éclairage avant adaptatif d'un véhicule automobile**
Steuerungsverfahren zum adaptativen Umschalten des Beleuchtungsmodus der vorderen Scheinwerfer eines Kraftfahrzeugs
Method for controlling the switching of an adaptive headlight system of an automobile

(30) Priorité: 17.02.2011 FR 1151291
(43) Date de publication de la demande: 22.08.2012
(73) Titulaire: Valeo Vision, 93012 Bobigny (FR)
(72) Inventeur: Ba, Sidy Ndiogou, 92310 SEVRES (FR)

(56) Documents cités:
- FR-A1- 2 799 703
- FR-A1- 2 839 687
- US-A- 5 566 072
- US-A- 5 660 454
- US-A- 5 781 105

## Description

L'invention concerne la commande de commutation du système d'éclairage avant adaptatif d'un véhicule automobile.

Les véhicules automobiles actuels les plus récents comportent, en général, une fonction de commande de commutation automatique du système d'éclairage avant adaptatif du véhicule considéré.

Une telle fonction, connue sous le nom de fonction AFS pour Adaptive Frontlight System en anglais, permet la commutation automatique du système d'éclairage avant du véhicule entre différentes classes de faisceaux de croisement, en fonction des conditions de circulation et de trafic du véhicule. La fonction de commutation précitée permet de préserver la sécurité tant du conducteur et des passagers du véhicule considéré que celle des utilisateurs des véhicules le précédant et/ou croisant ce dernier sur une voie parallèle.

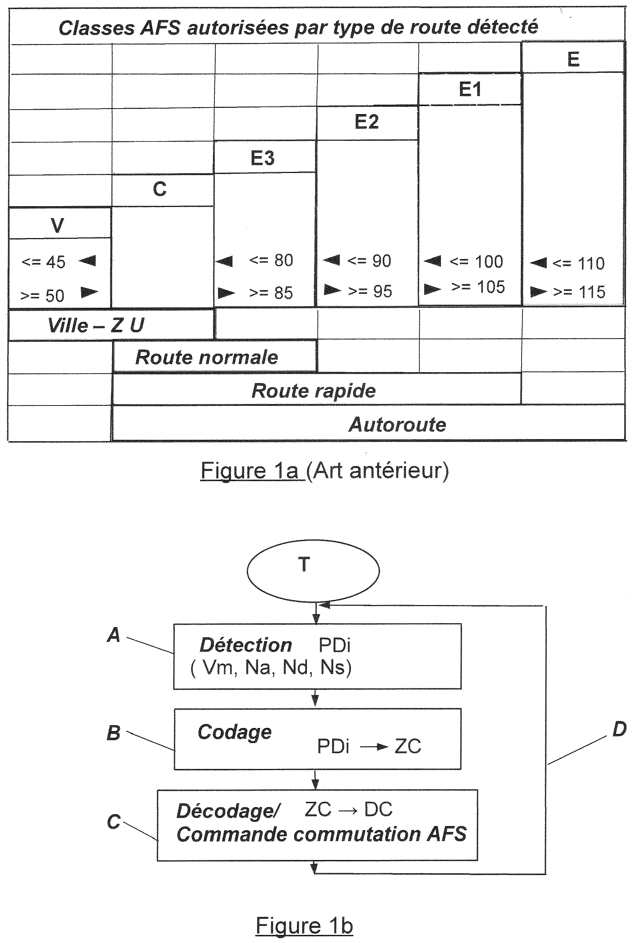

La figure 1 a représente un diagramme de répartition de l'utilisation des différentes classes de faisceaux sur les différents domaines de circulation et de trafic désignés zone urbaine ou ville, route normale, route rapide et autoroute.

Les classes de faisceaux V et C sont utilisées pour la circulation du véhicule à une vitesse inférieure à 45 km/h et jusqu'à 50 km/h, respectivement pour une vitesse comprise entre 50 km/h et jusqu'à 85 km/h. Les classes de faisceaux V et C, ville et code, font l'objet d'une réglementation spécifique désignée DISPOSITIONS UNIFORMES CONCERNANT L'HOMOLOGATION DES SYSTEMES D'ECLAIRAGE AVANT ADAPTATIF (AFS) DESTINES AUX VEHICULES AUTOMOBILES, Règlement 123 entré en vigueur le 2 février et publié sous l'égide des NATIONS UNIES à GENEVE.

La définition des classes de faisceaux désignées E3, E2, E1 est laissée à l'initiative du constructeur automobile ou à l'équipementier fournisseur du système d'éclairage avant des véhicules construits par ce dernier. Les classes de faisceaux précitées consistent généralement en une intensité d'éclairage progressive et une répartition des plages de vitesse de commutation en recouvrement sur la plage globale comprise entre 80 km/h et 110km/h.

La définition de la classe de faisceau E concerne la circulation du véhicule sur autoroute pour une vitesse de ce dernier supérieure à 110 km/h.

Le recouvrement des plages de vitesse précitées, autres que celle réservée à la circulation sur autoroute, et des domaines d'utilisation correspondants ne permet pas d'assigner de manière biunivoque une ou plusieurs classes de faisceaux à un domaine de circulation en fonction de la seule vitesse du véhicule, car le choix fonctionnel de la classe de faisceau dépend en outre du trafic réel routier instantané sur le domaine de circulation considéré.

Les dispositifs ou systèmes de commande de commutation AFS des véhicules actuels permettent d'apporter une solution satisfaisante dans certaines situations.

À titre d'exemple, le brevet US 5 781 105 décrit un dispositif dans lequel des capteurs de paramètres extrinsèques du véhicule, niveau de trafic, type de route, ou intrinsèques du véhicule tels que vitesse du véhicule, changement de direction, permettent d'effectuer le choix de commutation de la classe de faisceau adaptée, grâce à des opérations en logique booléenne et en logique floue.

On peut aussi citer le brevet FR 2 839 687, qui décrit un procédé de changement automatique de types de faisceaux en fonction de la route fréquentée. L'évaluation du type de route est réalisée en utilisant une logique booléenne appliquée à des variables mesurées chacune par des capteurs spécifiques. On peut également citer le brevet FR 2 799 703, dans lequel le procédé de commande des faisceaux utilise la vitesse moyenne et des paramètres obtenus par des capteurs spécifiques, par exemple un interrupteur de freinage ou un capteur de manoeuvre de la pédale de frein.

Le principal inconvénient des systèmes de ce type réside dans le fait d'assujettir la fonction AFS à la présence de nouveaux capteurs dans le véhicule, voire d'une caméra ou d'un système de navigation permettant, à partir de données relatives à l'environnement du véhicule, et donc de données extrinsèques à ce dernier, d'estimer les conditions de trafic routier dans lesquelles celui-ci évolue.

De tels systèmes imposent la gestion, par le système d'éclairage, des informations fournies par ces capteurs, ce qui nécessite la mise en oeuvre d'algorithmes soit de traitement assez complexes, tels que algorithmes de reconnaissance et de comptage d'objets dans l'image, avec reconnaissance dans l'image de panneaux de signalisation, soit de gestion de coordonnées GPS en liaison avec une cartographie adaptée dans le cas de l'utilisation d'un système de navigation.

En particulier, dans le cas de l'utilisation des seules informations de navigation GPS, le processus de commande AFS est totalement sujet aux insuffisances des systèmes de navigation, car la qualité de localisation du véhicule est souvent fluctuante et la localisation relative, vis-à-vis des domaines de circulation, ville, route normale, route rapide ou autoroute, peut-être aléatoire, notamment pour ce qui concerne les domaines ville et route normale. De tels aléas peuvent engendrer un fonctionnement médiocre voire dangereux de la fonction AFS du véhicule.

Enfin la fonction AFS peut par ailleurs être rendue inopérante, lorsque les informations traitées par le système de navigation sont incohérentes ou contradictoires, voire inexistantes, en particulier lorsque le domaine de circulation du véhicule est situé dans une zone de non couverture satellite GPS.

La présente invention a pour objet de remédier à l'ensemble des inconvénients et limitations des systèmes de commande AFS de l'art antérieur, par la mise en oeuvre d'un procédé et d'un dispositif de commande de commutation AFS totalement autonome et indépendant de tout capteur supplémentaire spécifique.

Un autre objet de la présente invention est en outre la mise en oeuvre d'un procédé et d'un dispositif de commande AFS facilement applicable à et installable sur un véhicule neuf, ou existant et déjà en circulation, par remplacement d'un simple boîtier sur les véhicules existants, en raison de l'absence de nécessité d'installation de tout capteur supplémentaire, notamment de caméras, ce qui permet de diminuer les coûts d'intervention, dans l'hypothèse d'une généralisation des systèmes de commande AFS aux fins d'augmenter la sécurité des utilisateurs de véhicules automobiles.

Le procédé de commande de commutation du système d'éclairage avant adaptatif d'un véhicule automobile, objet de l'invention, permet la sélection automatique adaptative aux conditions de trafic et de circulation du véhicule entre différentes classes de faisceaux de croisement.

Il est remarquable en ce qu'il comprend au moins les étapes selon la revendication 1 et notamment : détecter, sur au moins une durée déterminée, un ensemble de paramètres dynamiques intrinsèques du véhicule, coder en logique floue au moins un sous-ensemble de variables dynamiques intrinsèques détectées selon au moins une valeur floue représentative d'une zone de circulation et de trafic détectée du véhicule, décoder la valeur floue en une valeur réelle représentative du domaine de circulation et de trafic détecté et commander la commutation du système d'éclairage avant du véhicule sur une classe de faisceau de croisement adaptée au domaine de circulation et de trafic détecté du véhicule.

Le procédé objet de l'invention est en outre remarquable en ce que lesdites variables dynamiques intrinsèques du véhicule comprennent au moins, calculées sur ladite durée déterminée, la vitesse moyenne du véhicule, le nombre d'accélérations et/ou de décélération du véhicule, le nombre d'arrêts du véhicule.

Le procédé objet de l'invention est en outre remarquable en ce que celui-ci est mis en oeuvre en continu pendant la marche du véhicule, par répétition successive desdites durées déterminées.

Le procédé objet de l'invention est en outre remarquable en ce que ladite durée déterminée est comprise entre 45 secondes et 180 secondes.

Le procédé objet de l'invention est en outre remarquable en ce que l'étape consistant à coder en logique floue un sous-ensemble de variables dynamiques intrinsèques détectées comprend au moins l'appel d'un ensemble de prédicats, implémentant une base de règles floues, l'instanciation des prédicats appelés au moyen des variables dynamiques intrinsèques détectées pour engendrer les dites règles, l'interprétation des dites règles et leur traduction selon au moins un domaine de circulation et de trafic détecté le plus vraisemblable du véhicule.

Le procédé objet de l'invention est en outre remarquable en ce que la commande de commutation du système d'éclairage avant du véhicule comprend le choix de la classe de faisceau de croisement adaptée en fonction du domaine de circulation et de trafic détecté du véhicule le plus vraisemblable et de la vitesse du véhicule.

Selon une variante de réalisation, le procédé objet de l'invention peut en outre permettre de corréler le domaine de circulation et de trafic détecté du véhicule et la position géographique GPS du véhicule.

Le dispositif de commande de commutation du système d'éclairage avant adaptatif d'un véhicule automobile, objet de l'invention, permet la sélection automatique adaptative aux conditions de trafic et de circulation du véhicule entre différentes classes de faisceaux de croisement.

Il est remarquable en ce qu'il comprend au moins les caractéristiques techniques de la revendication 7 et notamment des moyens de détection, sur au moins une durée déterminée, d'un ensemble de variables dynamiques intrinsèques du véhicule, des moyens de codage/décodage, en logique floue, exécutant le codage d'au moins un sous-ensemble de variables dynamiques intrinsèques détectées selon au moins une valeur floue représentative d'une zone de circulation et de trafic détectée du véhicule et le décodage de cette au moins une valeur floue en une valeur réelle représentative du domaine de circulation et de trafic détecté du véhicule , et des moyens de commande de commutation du système d'éclairage avant du véhicule sur une classe de faisceau de croisement adaptée au domaine de circulation et de trafic détecté du véhicule, en fonction de cette valeur réelle.

Le dispositif objet de l'invention est en outre remarquable en ce que lesdits moyens de détection d'un ensemble de variables dynamiques intrinsèques du véhicule comprennent au moins un module de filtrage et de formatage des variables dynamiques du véhicule, connecté au bus de communication du véhicule, un module de pré-traitement connecté au module de filtrage et de formatage, cadencé par un signal d'horloge, ledit module de pré-traitement délivrant, sur chaque durée déterminée successive, les variables dynamiques intrinsèques au véhicule, vitesse moyenne du véhicule, nombre d'accélérations et où décélération du véhicule et nombre d'arrêts du véhicule.

Le dispositif objet de l'invention est également remarquable en ce que lesdits moyens de codage/décodage en logique floue d'au moins un sous-ensemble de variables dynamiques intrinsèques détectées selon au moins une zone de circulation et de trafic détecté du véhicule incluent au moins un module de fuzzification du sous-ensemble des variables dynamiques intrinsèques du véhicule, par attribution à chaque variable dynamique détectée d'un état d'entrée relatif et allocation de zones de sortie correspondant chacune à une zone de circulation possible, un module d'inférence floue comportant une base de règles floues formée par un système de prédicats, les dites règles floues liant l'appartenance des variables dynamiques détectées aux zones correspondantes de sortie par instanciation des prédicats par les états d'entrée relatifs correspondants, un module d'agrégation des différentes zones de sortie selon une valeur floue sous-ensemble solution en logique floue du système des prédicats.

Le dispositif objet de l'invention est également remarquable en ce que lesdits moyens de commande de commutation du système d'éclairage avant du véhicule comprennent au moins un module de défuzzification de la valeur floue sous-ensemble solution en logique floue du système de prédicats, permettant de transformer ladite valeur floue en une valeur physique réelle représentative du domaine de circulation et de trafic dans lequel évolue le véhicule.

L'invention couvre en outre un produit de programme d'ordinateur comportant une suite d'instructions exécutables sur un ordinateur ou un calculateur dédié d'un véhicule automobile pour la mise en oeuvre du procédé respectivement du dispositif objets de l'invention.

Ce produit de programme d'ordinateur est remarquable en ce que, lors de l'exécution desdites instructions, ledit programme exécute :
- l'appel d'un ensemble de prédicats implémentant une base règle floues;
- l'instanciation des prédicats appelés à partir de variables dynamiques détectées intrinsèques du véhicule pour engendrer des règles floues ;
- l'interprétation et la traduction des règles floues selon au moins un domaine de circulation détecté le plus vraisemblable du véhicule.

Le produit de programme d'ordinateur précité est en outre remarquable en ce que, lors de cette exécution, l'interprétation des dites règles floues et leur traduction incluent la transformation de la valeur floue associée au sous-ensemble solution en logique floue du système de prédicats en une valeur physique réelle représentative du domaine de circulation dans lequel évolue le véhicule.

Le procédé, le dispositif de commande de commutation AFS et le programme d'ordinateur incorporé dans ces derniers, objets de l'invention, trouvent application à la construction et/ou l'équipement de tout type de véhicule automobile, véhicules poids-lourds, véhicules personnels ou autres. Selon l'invention, les variables dynamiques intrinsèques du véhicule sont déterminées soit exclusivement à partir de l'information vitesse du véhicule soit exclusivement à partir de l'information vitesse du véhicule et d'un signal d'horloge. Ceci permet au procédé d'être mis en oeuvre à partir d'algorithmes simples.

Si on le souhaite, les variables dynamiques intrinsèques du véhicule sont déterminées à partir de mesures provenant uniquement d'un capteur de vitesse.

Selon certains modes de réalisation du dispositif selon l'invention, les moyens de détection d'un ensemble de variables dynamiques intrinsèques du véhicule comprennent au moins un module de filtrage et de formatage des données dynamiques du véhicule.

Le cas échéant, ce module de filtrage est destiné à être connecté au bus de communication du véhicule.

Dans un mode de réalisation de l'invention, le module de filtrage est connecté au bus de communication du véhicule.

Par exemple, le module de filtrage permet d'appliquer un filtrage antibruit adapté auxdites données dynamiques du véhicule, ces données dynamiques étant disponibles sur le bus de communication du véhicule.

Selon un mode de réalisation de l'invention, les données dynamiques du véhicule consistent, notamment uniquement, en de l'information vitesse du véhicule.

Eventuellement, lesdits moyens de détection comprennent un module de pré-traitement connecté au module de filtrage et de formatage, cadencé par un signal d'horloge.

Le cas échéant, ledit module de pré-traitement délivre, sur chaque durée déterminée successive, les variables dynamiques intrinsèques du véhicule, vitesse moyenne du véhicule, nombre d'accélérations et où décélération du véhicule et nombre d'arrêts du véhicule. Selon l'invention, les variables dynamiques intrinsèques du véhicule sont déterminées soit exclusivement à partir de l'information vitesse du véhicule soit exclusivement à partir de l'information vitesse du véhicule et du signal d'horloge.

Selon un mode de réalisation, les variables dynamiques intrinsèques du véhicule sont déterminées à partir de mesures provenant uniquement d'un capteur de vitesse.

Ils seront mieux compris à la lecture de la description et à l'observation des dessins ci-après, dans lesquels, outre la figure 1 a relative à l'art antérieur,
- la figure 1b représente un organigramme des étapes essentielles de mise en oeuvre du procédé de commande objet de l'invention ;
- les figures 2a et 2b représentent des fonctions de codage en logique floue des variables dynamiques intrinsèques détectées en état d'entrée relatif et des zones de circulation ville, route normale, route rapide et autoroute ;
- la figure 3a illustre le processus d'interprétation en logique floue des variables dynamiques intrinsèques, exprimées sous forme de valeur relative selon une zone de circulation au moyen de règles d'inférence floues ;
- la figure 3b représente le processus d'inférence proprement dit pour une des variables dynamiques considérées ;
- la figure 3c représente le processus d'agrégation des prédicats instanciés au moyen des variables dynamiques codées en logique floue ;
- la figure 4a représente un schéma fonctionnel d'un dispositif de commande de commutation AFS, conforme à l'objet de la présente invention ;
- la figure 4b représente un diagramme fonctionnel du mode opératoire du dispositif objet de l'invention pour chaque durée successive déterminée;
- la figure 5 représente, à titre d'exemple non limitatif, un logigramme fonctionnel du séquencement du fonctionnement du dispositif de commande de commutation AFS objet de la présente invention, représenté en figures 4a et 4b.

Le procédé objet de l'invention sera maintenant décrit en référence à la figure1b.

En référence à la figure précitée, ce procédé comprend, dans le but d'assurer la commutation du système d'éclairage avant adaptatif d'un véhicule automobile entre différentes classes de faisceaux de croisement, telles que représentées en figure1a, l'étape de détecter en une étape A sur une durée déterminée, notée T, un ensemble de paramètres dynamiques intrinsèques du véhicule. Sur la figure précitée l'ensemble des paramètres dynamiques intrinsèques au véhicule est noté PDi.

L'étape A est suivie d'une étape B de codage en logique floue d'au moins un sous-ensemble de variables dynamiques intrinsèques détectées selon au moins une valeur floue représentative d'une zone de circulation et de trafic détectée ZC du véhicule. À l'étape B de la figure1b, l'opération de codage est symbolisée par la relation (1):

PDi → ZC.

On comprend, en particulier, que le sous-ensemble de variables dynamiques intrinsèques détectées peut-être constitué soit par la totalité des variables dynamiques intrinsèques détectées, soit par une partie de ces dernières. Dans la relation précédente, ZC désigne la zone de circulation et de trafic détectée.

L'étape B est elle-même suivie d'une étape C de décodage/commande de commutation AFS, l'opération de décodage, notée ZC → DC, consistant à décoder la valeur floue ZC obtenue à l'étape B précédente en une valeur physique réelle représentative du domaine de circulation et de trafic DC détecté. La commande de commutation AFS est exécutée à partir de la valeur physique réelle détectée pour sélectionner une classe de faisceau de croisement adaptée au domaine de circulation et de trafic détecté DC du véhicule.

On comprend bien sûr, en référence à la figure1b, que le procédé objet de l'invention est mis en oeuvre en continu pendant la marche du véhicule, par répétition successive des durées déterminées de valeur T. La répétition successive est symbolisée par la boucle de retour D à l'étape de détection A pour la durée déterminée T précitée suivante.

Selon un aspect particulièrement remarquable du procédé objet de l'invention, les variables dynamiques intrinsèques du véhicule comprennent au moins, calculées sur la durée déterminée T, la vitesse moyenne du véhicule, notée Vm, le nombre d'accélérations Na et/ou de décélérations Nd du véhicule ainsi que le nombre d'arrêts, noté Ns, de ce dernier.

On comprend ainsi que les variables dynamiques du véhicule, et elles seules, permettent de déterminer avec un degré de vraisemblance satisfaisant le domaine de circulation et de trafic détecté DC dans lequel évolue le véhicule pendant chaque durée successive T.

D'une manière plus spécifique, on indique que la durée déterminée T peut être choisie égale à une valeur temporelle comprise entre 45 et 180 secondes. Le choix de la valeur retenue peut-être effectué par l'équipementier constructeur du système de commutation AFS en fonction de la puissance et du type de véhicule, à un véhicule de forte puissance, et donc capable d'atteindre des accélérations et des vitesses très importante, pouvant être attribuée une valeur temporelle plus faible que celle retenue pour un véhicule poids-lourd par exemple.

L'étape B consistant à coder en logique floue un sous-ensemble de variables dynamiques intrinsèques détectées PDi comprend au moins l'appel d'un ensemble de prédicats implémentant une base de règles floues, l'instanciation des prédicats appelés au moyen des variables dynamiques intrinsèques détectées pour engendrer les règles effectives pour la durée déterminée T, puis l'interprétation de ces règles et leur traduction selon au moins une zone de circulation ZC et de trafic détectée la plus vraisemblable du véhicule.

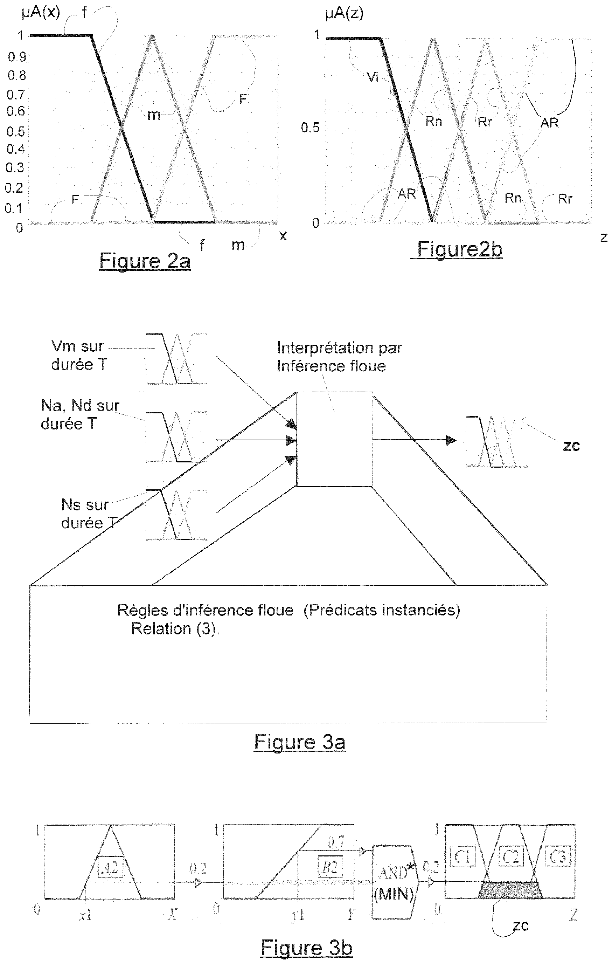

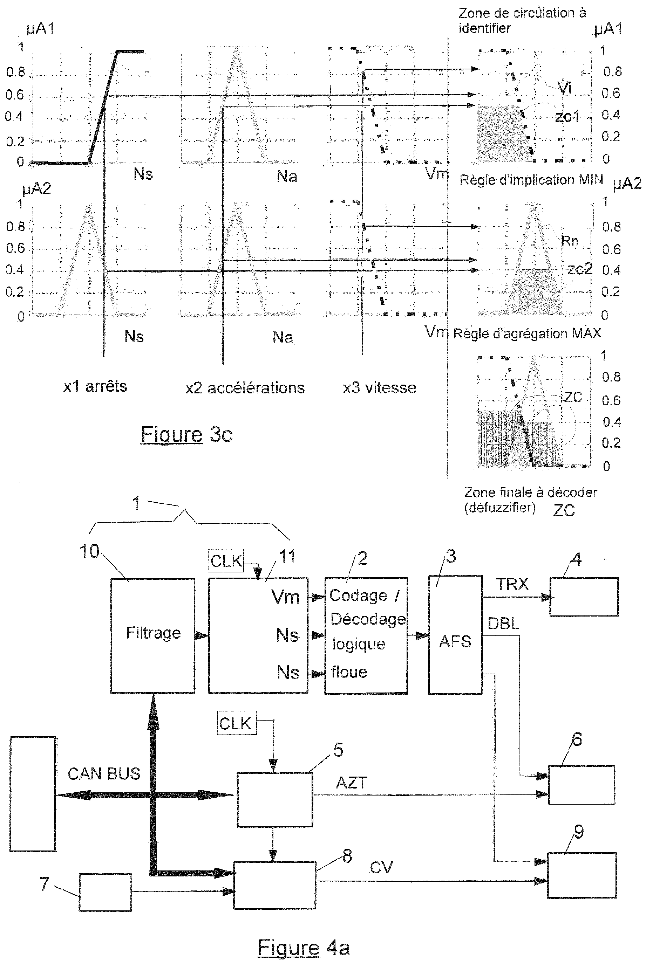

Un mode de mis en oeuvre préférentiel de l'étape B de codage en logique floue, encore désigné fuzzification, sera maintenant décrit de manière non limitative en liaison avec les figures 2a, 2b, 3a, 3b et 3c.

En référence aux figures 2a et 2b, les sous-étapes successives sont décrites ci-après :
- sous étape 1: définition des entrées et sorties.

En entrée, on dispose des données issues de l'information vitesse du véhicule c'est-à-dire des variables dynamiques intrinsèques du véhicule, soit des variables Vm, Na et Nd, Ns détectées sur la durée T. En sortie l'on obtient la zone de circulation et de trafic du véhicule détectée ZC.
- sous étape 2: codage en logique floue, fuzzification, c'est-à-dire définition des fonctions d'appartenance des variables dynamiques précitées. On comprend que par cette opération on attribue à chaque variable dynamique des degrés d'appartenance à différents états prédéterminés. À titre d'exemple non limitatif on peut définir trois états d'entrée en valeur relative pour chacune des variables dynamiques précitées désignées génériquement par la lettre x , faible f, moyen m et élevé (fort), F, et quatre zones de circulation a priori pour une vitesse désignée par la lettre z, ville (zone urbaine) Vi, route normale Rn, route rapide Rr et autoroute AR.

Sur la figure, 2a on a représenté la fonction de codage en logique floue des variables dynamiques en valeur relative, le degré d'appartenance µA(x) aux différents états précités étant compris entre 0 et 1. Les fonctions d'appartenance des variables dynamiques d'entrée sont représentées sur la figure 2a par la fonction faible f, la fonction moyenne m et la fonction élevée F.

Sur la figure 2b, on a également représenté la fonction de codage des zones de circulation en sortie de degré d'appartenance µA(z) pour la ville Vi, pour la route normale Rn, pour la route rapide Rr et enfin pour l'autoroute AR.

En effet, un ensemble flou A est défini sur un ensemble d'éléments par sa fonction d'appartenance pA, µA(x) définissant le degré d'appartenance de l'élément (variable) x à l'ensemble A.

La définition en logique floue de l'ensemble A est donnée par la relation (2):
µA: U → [0,1]
x → µA(x)
A = {(x, µA(x))| x ∈ U}
supp(A) = {x ∈ U| µA(x) >= 0}
moy (A) = {x ∈ U|µA(x) = 1}.

Bien que sur les figures 2a et 2b les fonctions d'appartenance soient représentées de manière non limitative par des parties de fonctions linéaires, d'autres types de fonctions peuvent être mis en oeuvre, notamment triangulaire, trapézoïdale, gaussienne, sigmoïde par exemple.

Ainsi, le codage en logique floue, fuzzification, convertit les variables dynamiques intrinsèques du véhicule en variables floues compatibles avec la représentation d'ensembles flous interprétables par des règles d'inférence.

### -sous étape 3:

Raisonnement flou par création des règles d'inférence.

Cette opération permet d'allouer les règles qui lient les variables dynamiques intrinsèques du véhicule, exprimées en valeur relative selon la figure 2a, aux décisions de la sortie zone de circulation et de trafic, exprimée en logique floue selon la figure 2b.

Cette opération correspondant à l'opération de fuzzification proprement dite est mise en oeuvre à partir d'une base de règles établies par un ensemble de prédicats pour différents types de véhicules, sur retour d'expérience de roulage et de tests de ces derniers.

En raison du chevauchement nécessaire des classes de faisceau de croisement utilisables et des domaines de circulation pertinents correspondants, tel que représenté en figure 1a, et en conséquence des prédicats en assurant la représentation, le lien de cause à effet entre variables dynamiques d'entrée et zone de circulation et de trafic correspondant n'est connu de manière déterministe, en correspondance bi-univoque, qu'en certaines valeurs de ces dernières. Les autres valeurs non déterministes ne sont pas contradictoires mais toutes les règles permettent de contribuer à la détermination de la zone de circulation à identifier pour la valeur des paramètres dynamiques considérés sur la durée T.

Le mode opératoire correspondant est illustré en figure 3a.

Sur la figure précitée, on a représenté l'opération de codage de 3 variables dynamiques Vm, Na/Nd et Ns selon la figure 2a, étant précisé, qu'à titre de simplification, le nombre d'accélérations Na et le nombre de décélérations
Nd sont identiques sur la durée T. Cette hypothèse simplificatrice est légitime et introduite dans le seul but de ne pas surcharger le dessin.

Les règles d'inférence floue (prédicats instanciés) sont données ci après selon la relation (3) où zc désigne la zone de circulation pour le prédicat vérifié considéré:
- 1 Si Ns ∈ F (élevé) ET Na/Nd ∈ F (élevé) ET Vm ∈ f (faible) alors zc ∈ Vi ;
- 2 Si Ns ∈ m (moyen) ET Na/Nd ∈ m (moyen) ET Vm ∈ f (faible) alors zc ∈ Rn ;
- 3 Si Ns ∈ f (faible) ET Na/Nd ∈ m (moyen) ET Vm ∈ m (moyen) alors zc ∈ Rr ;
- 4 Si Ns ∈ f (faible) ET Na/Nd ∈ f (faible) ET Vm ∈ F (élevé) alors zc ∈ AR ;
- 5 .............................................................................

D'autres règles peuvent être implémentées, mais il existe au moins une règle par zone de circulation zc considérée.

L'opération d'interprétation par inférence floue porte sur l'ensemble des règles implémentées. Elle comprend l'étape d'admettre une proposition, c'est à dire le prédicat instancié implémentant la règle correspondante, en vertu de la liaison de cette dernière avec d'autres propositions, prédicats instanciés, tenus pour vrais.

L'opération d'inférence floue est illustrée en référence à la figure 3b, dans laquelle un prédicat pour deux variables dynamiques intrinsèques du véhicule x1 et y1 quelconques engendrant une variable floue zc d'appartenance à une zone de circulation floue zc, pour un degré d'appartenance uA(x1) et µB(y1) des prémisses x1 et y1 respectivement selon la relation (4):
Si x1 = A2(0.2) ET y1 = B2(0.7) ALORS (min) zc = C2(0.2).

Dans la relation (4) précédente, on comprend que la zone de circulation admise zc correspond à l'intersection définie par la fonction MIN en logique floue, représentée en grisé, entre les sous-ensembles C1, C2 et C3.
Un exemple d'application des règles d'inférence floue, telles qu'illustrées en figure 3b, à toutes les règles établies, limitées toutefois à 2 pour les trois variables dynamiques intrinsèques précédentes Ns, Na/Nd et Vm, est illustré ci-après en liaison avec la figure 3c.

En référence à la figure précitée, les prédicats correspondants s'écrivent selon la relation (5):
- 1 Si Ns ∈ F (élevé µA1=0.6) ET Na/Nd ∈ m (moyen µB=0.5) ET Vm ∈ f (faible µC=0.82) ALORS min {0.82;0.6;05} = 0.5;
- 2 Si Ns ∈ m (moyen µA2= 0.4) ET Na/Nd ∈ m (moyen µB=0.5) ET Vm ∈ f (faible µC=0.82) ALORS min {0.82;0.6;0.4} = 0.4.

On exécute l'interprétation de tous les prédicats ainsi de suite et l'on détermine ainsi successivement les fonctions d'appartenance du sous-ensemble flou de chaque règle par l'opérateur de logique floue MIN appliqué à chaque prédicat instancié. Sur la figure 3c, la fonction d'appartenance du sous-ensemble flou solution de chaque règle 1, 2 est exécutée par application de l'opérateur de logique floue règle d'implication MIN, le choix de la zone de circulation de règle zc1, zc2 représentée en grisé étant déterminée à partir de la fonction d'appartenance dont le degré d'appartenance µA1, µA2 est maximum, 0.82.

Les fonctions d'appartenance du sous-ensemble flou zc1, zc2 solution de chaque règle ayant été déterminées, on procède au calcul du sous ensemble solution du système de prédicats par agrégation des résultats solution de chaque règle par application de l'opérateur de logique floue MAX, ainsi que représenté en figure 3c, sur les solutions zc1, zc2 de chaque règle, jusqu'à épuisement de toutes les solutions de règles.

Sur la figure 3c, pour les 2 sous-ensembles flous zc1, zc2 solutions de chaque règle représentée, le sous-ensemble solution du système de prédicats est représenté par les zones hachurées en recouvrement notées, ZC, représentant en fait l'union de zc1, zc2 solution de chaque règle.

### -sous-étape 4:

Les surfaces hachurées en recouvrement ZC représentées en figure 3c constituent une valeur floue sous ensemble solution du système de prédicats, et, en définitive, de l'ensemble des variables dynamiques intrinsèques du véhicule sur la durée déterminée T dans l'espace degré d'appartenance - variables dynamiques vitesse en valeur relative.

Cette valeur floue ZC doit être transformée par décodage en logique floue, encore désigné défuzzification, en une valeur physique réelle permettant de commander la commutation AFS du choix de classe de faisceau de croisement.

Trois méthodes de défuzzification peuvent être implémentées.

Une première méthode dite, du maximum, comprend l'étape de retenir pour valeur physique réelle l'abscisse minimum de l'ordonnée maximum de la surface solution. Cette technique simple, sinon simpliste, méconnaît toutefois les règles secondaires qui peuvent néanmoins s'avérer importantes pour assurer la stabilité du système.

Une deuxième méthode, dite de la moyenne pondérée, comprend l'étape de calculer la moyenne des résultats en leur attribuant comme coefficient la valeur de leur degré d'appartenance. Cette méthode, plus exacte que la précédente, prend en compte tous les résultats définis pour chaque règle, mais est susceptible de maintenir quelques ambiguïtés.

Une troisième méthode préférentielle, dite des centroïdes, comprend l'étape de calculer le centre de gravité des surfaces zc1, zc2, etc.. solution de chaque règle puis à pondérer le résultat calculé au moyen de la surface correspondante.

La valeur réelle obtenue, suite à l'opération de défuzzification précitée, correspond à un taux ou pourcentage représentatif du domaine de circulation et de trafic DC du véhicule permettant d'effectuer la commande de commutation AFS.

Enfin, dans une variante de mise en oeuvre, le domaine de circulation et de trafic détecté du véhicule peut être corrélé à la position géographique GPS de ce dernier.

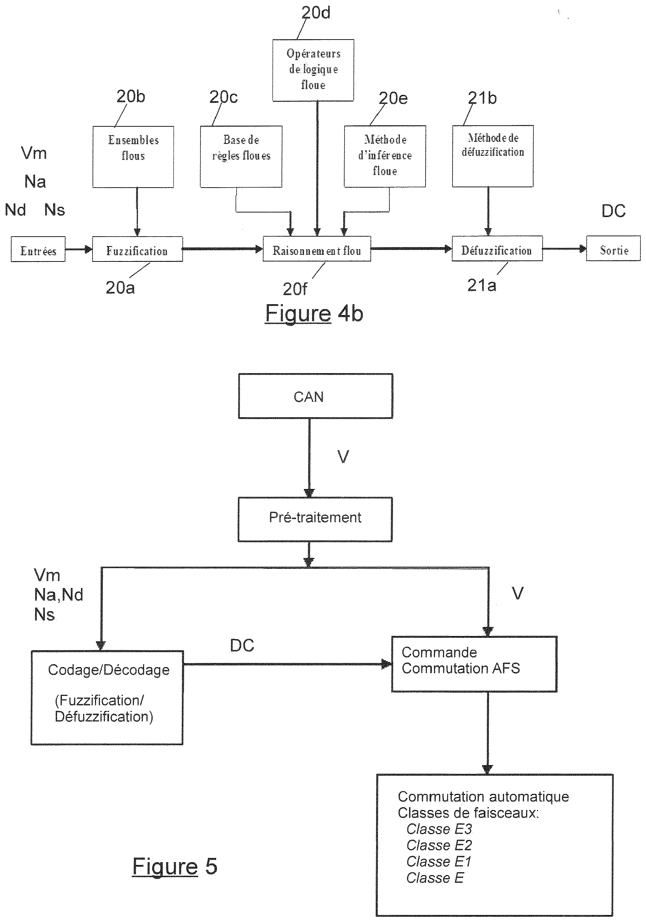

Une description plus détaillée du dispositif de commande de commutation d'un système d'éclairage avant adaptatif d'un véhicule automobile, conforme à l'objet de la présente invention, sera maintenant donnée en liaison avec les figures 4a et 4b.

Sur la figure 4a, on a représenté le schéma fonctionnel complet d'un dispositif selon l'invention. Ce dernier comporte connecté au bus de données du véhicule, noté CAN BUS, un module 1 de détection sur au moins une durée déterminée T d'un ensemble de variables dynamiques intrinsèques du véhicule, soit des variables vitesse moyenne du véhicule, Vm, nombre d'accélérations Na et/ou de décélérations Nd du véhicule et enfin nombre d'arrêts, Ns, de ce dernier sur la durée déterminée considérée.

Le module 1 est avantageusement constitué d'un premier sous-module de filtrage 10 auquel est connecté un sous-module de pré-traitement 11 cadencé par un signal d'horloge noté CLK. Le module de filtrage 10 permet d'extraire l'information vitesse du véhicule disponible sur le bus de données et d'appliquer un filtrage antibruit adapté. Le module de pré-traitement 11 permet l'exécution d'un formatage adapté des données filtrées, d'une quantification et un échantillonnage à une période très supérieure à la durée T considérée. Ainsi, les variables dynamiques intrinsèques du véhicule précitées sont disponibles en sortie du sous-module de pré- traitement 11 et du module 1 de détection.

Ce dernier est suivi d'un module 2 de codage/décodage en logique floue d'au moins un sous-ensemble de variables dynamiques intrinsèques du véhicule détectées, ce sous-ensemble pouvant comprendre tout ou partie des variables dynamiques intrinsèques précitées. L'opération de codage permet l'obtention d'une valeur floue ZC représentative d'une zone de circulation et de trafic détecté du véhicule, ainsi que décrit précédemment dans la description en liaison avec les figures 3a à 3c.

Le module 2 précité exécute également l'opération de décodage de cette valeur floue ZC pour l'obtention de la valeur réelle représentative du domaine de circulation et de trafic détecté du véhicule DC, ainsi que l'écrit précédemment dans la description du procédé objet de l'invention.

Le module 2 précité est connecté à un module 3 de commande de commutation du système d'éclairage avant du véhicule sur une classe de faisceau de croisement adaptée au domaine de circulation et de trafic détecté DC du véhicule.

De manière classique, le module 3 de commande de commutation comporte avantageusement une sortie de commande tri-xénon TRX, directement reliée à un actionneur tri xénon 4, une sortie DBL reliée à un actionneur DBL 6. L'actionneur DBL 6 reçoit en outre un signal de commande azimutale du faisceau, AZT, délivré par un module de commande azimutale de faisceau 5, lui-même connecté au bus de données du véhicule CAN BUS et également cadencé par le signal d'horloge CLK.

Enfin, le dispositif objet de l'invention comporte également, de manière classique, un module de commande verticale de faisceau 8 connecté au bus de données du véhicule et au module de commande azimutale de faisceau 5 pour assurer la commande du faisceau lors d'un changement de direction du véhicule. Le module de commande verticale de faisceau 8 reçoit en outre un signal d'assiette du véhicule délivré par un capteur d'assiette 7 et délivre un signal de commande verticale CV à un actionneur 9 de commande verticale de faisceau.

Le mode opératoire des différents modules 2 et 3 constitutifs du dispositif objet de l'invention est maintenant décrit en liaison avec la figure 4b .

En ce qui concerne le module 2, en référence à la figure 4b, lors du codage, les variables dynamiques intrinsèques du véhicule, variables d'entrée, sont traitées par un module de fuzzification 20a, lequel, à partir des fonctions de degré d'appartenance, telles que représentées en figure 2a et 2b et mémorisées dans une mémoire de données 20b permettent l'exécution du raisonnement flou 20f à partir de l'appel des bases de règles floues 20c, des opérateurs de logique floue MIN et MAX et d'une méthode d'inférence floue 20e interprétant les prédicats, ainsi que décrit précédemment dans la description en liaison avec la figure3b, pour délivrer la ou les valeur floues zc1 et zc2 respectivement ZC, ainsi que décrit en liaison avec la figure 3c.

Lors du décodage, un module de défuzzification 21a appelle une méthode de défuzzification 21b retenue, telle que la méthode centroïde, ainsi que mentionné précédemment dans la description, pour délivrer en sortie la variable réelle représentative du domaine de circulation et de trafic détecté DC.

Le séquencement du fonctionnement de l'ensemble du dispositif objet de l'invention, en particulier les modules 1,2 et 3 de ce dernier, est représenté en figure 5. Suite au pré-traitement exécuté par le module 1, le codage/ décodage en logique floue est exécuté par le module 2 et la commande de commutation AFS pour le choix de la classe de faisceau de croisement est effectuée à partir de la valeur réelle représentative du domaine de circulation du véhicule détecté DC et de la vitesse instantanée V du véhicule.

Bien entendu, l'ensemble des modules 1, sous module 10 et 11, et le module 2 de codage/décodage en logique floue peuvent être réalisés sous forme logicielle ou de circuit préprogrammé implémenté en modules autonomes susceptibles d'être directement insérés comme module complémentaire du module de commande de commutation AFS, 3, d'un véhicule déjà existant.

Dans ce but, et conformément à un aspect remarquable du procédé et du dispositif objets de l'invention, les modules précités peuvent être implémentés sous forme d'un programme d'ordinateur comportant une suite d'instructions exécutables par un ordinateur ou un calculateur dédié d'un véhicule automobile.

Lors de l'exécution de ces instructions pour le codage en logique floue ce programme exécute l'appel d'un ensemble de prédicats implémentant une base de règles floues 20c, l'instanciation des prédicats appelés à partir des variables dynamiques détectées intrinsèques du véhicule traitées 20b pour engendrer les règles floues puis l'interprétation et la traduction des règles floues selon au moins une zone de circulation détectée la plus vraisemblable du véhicule par l'appel des méthodes d'inférence floue 20e, 20f. Pour le décodage en logique floue lors de l'exécution de ces instructions, le programme exécute l'interprétation des règles floues 21d et leur traduction 21a exécute la transformation de la valeur floue ZC en une valeur physique réelle représentative du domaine de circulation DC dans lequel évolue le véhicule.

On a ainsi décrit un procédé et un dispositif de commande AFS du système d'éclairage avant d'un véhicule automobile sui généris particulièrement performant, dans lesquels les seules variables dynamiques intrinsèques du véhicule, en nombre limité cependant, permettent de déterminer, avec un degré de certitude satisfaisant, le domaine de circulation et de trafic dans lequel ce véhicule évolue, à partir de la seule allure de ce dernier. Bien entendu, l'allure de tout véhicule est subordonnée au mode de conduite de son conducteur, lequel est réputé exercer sa conduite dans les règles de l'art et dans le respect du code de la route et des limitations imposées par ce dernier.

## Revendications

1. Procédé de commande de commutation du système d'éclairage avant adaptatif d'un véhicule automobile, entre différentes classes de faisceaux de croisement, **caractérisé en ce qu'**il comprend les étapes suivantes :
- détecter (A), sur au moins une durée déterminée, un ensemble de paramètres dynamiques intrinsèques (PDi) du véhicule ; cette étape comprenant la détermination de variables dynamiques intrinsèques (Vm, Na, Nd, Ns), soit exclusivement à partir de l'information vitesse du véhicule soit exclusivement à partir de l'information vitesse du véhicule et d'un signal d'horloge (CLK) ;
- coder (B) en logique floue au moins un sous-ensemble de variables dynamiques intrinsèques déterminées (Vm, Na, Nd, Ns), selon au moins une valeur floue (ZC) représentative d'un domaine de circulation et de trafic détecté du véhicule ;
- décoder (C) ladite au moins une valeur floue en une valeur réelle (DC) et commander la commutation du système d'éclairage avant (4, 6, 9) du véhicule sur une classe de faisceau de croisement (E3, E2, E1, E) adaptée au domaine de circulation et de trafic détecté du véhicule, à partir de cette valeur réelle.

2. Procédé selon la revendication 1, **caractérisé en ce que** les variables dynamiques intrinsèques (Vm, Na, Nd, Ns) du véhicule sont déterminées à partir de mesures provenant uniquement d'un capteur de vitesse.

3. Procédé selon l'une des revendications 1 à 2, **caractérisé en ce que** lesdites variables dynamiques intrinsèques au véhicule comprennent au moins, calculées sur ladite durée déterminée (T):
- la vitesse moyenne du véhicule (Vm);
- le nombre d'accélérations (Na) et/ou de décélération (Nd) du véhicule ;
- le nombre d'arrêts du véhicule (Ns).

4. Procédé selon l'une des revendications 1 à 3, **caractérisé en ce que** celui-ci est mis en oeuvre en continu pendant la marche du véhicule, par répétition successive desdites durées déterminées (T).

5. Procédé selon l'une des revendications 1 à 4, **caractérisé en ce que** l'étape consistant à coder en logique floue un sous-ensemble de variables dynamiques intrinsèques déterminées comprend au moins:
- l'appel d'un ensemble de prédicats, implémentant une base de règles floues (20c);
- l'instanciation des prédicats appelés au moyen des variables dynamiques intrinsèques détectées (Vm, Na, Nd, Ns) pour engendrer les dites règles ;
- l'interprétation des dites règles et leur traduction selon au moins un domaine de circulation et de trafic détecté le plus vraisemblable du véhicule.

6. Procédé selon l'une des revendications 1 à 5, **caractérisé en ce que** la commande de commutation du système d'éclairage (4, 6, 9) avant du véhicule comprend le choix de la classe de faisceau de croisement (E3, E2, E1, E) adaptée en fonction du domaine de circulation et de trafic détecté du véhicule le plus vraisemblable et de la vitesse instantanée du véhicule.

7. Dispositif de commande de commutation du système d'éclairage avant adaptatif d'un véhicule automobile, entre différentes classes de faisceaux de croisement (E3, E2, E1, E), **caractérisé en ce qu'**il comprend au moins :
- des moyens de détection (1), sur au moins une durée déterminée (T), d'un un ensemble de paramètres dynamiques intrinsèques (PDi) du véhicule au moyen de la détermination d'un ensemble de variables dynamiques intrinsèques du véhicule (Vm, Na, Nd, Ns) du véhicule soit exclusivement à partir de l'information vitesse du véhicule, soit exclusivement à partir de l'information vitesse du véhicule et du signal d'horloge ;
- des moyens de codage/décodage (2), en logique floue, exécutant le codage d'au moins un sous-ensemble de variables dynamiques intrinsèques déterminées selon au moins une valeur floue (ZC) représentative d'une zone de circulation et de trafic détectée du véhicule et le décodage de cette au moins une valeur floue en une valeur réelle (DC) représentative du domaine de circulation et de trafic détecté du véhicule;
- des moyens de commande de commutation (3) du système d'éclairage (4, 6, 9) avant du véhicule sur une classe de faisceau de croisement (E3, E2, E1, E) adaptée au domaine de circulation et de trafic détecté du véhicule, en fonction de cette valeur réelle.

8. Dispositif selon la revendication 7, **caractérisé en ce que** lesdites variables dynamiques intrinsèques du véhicule incluent, calculées sur la durée déterminée,
- la vitesse moyenne du véhicule (Vm);
- le nombre d'accélérations (Na) et/ou de décélérations (Nd) du véhicule;
- le nombre d'arrêts du véhicule (Ns).

9. Dispositif selon la revendication 7 ou 8, **caractérisé en ce que** lesdits moyens de détection (1) d'un ensemble de variables dynamiques intrinsèques du véhicule (Vm, Na, Nd, Ns) comprennent au moins un module de filtrage et de formatage (10) des variables dynamiques du véhicule, ce module de filtrage étant destiné à être connecté au bus de communication du véhicule.

10. Dispositif selon la revendication 9, **caractérisé en ce que** le module de filtrage (10) est connecté au bus de communication du véhicule.

11. Dispositif selon l'une des revendications 9 ou 10, **caractérisé en ce que** le module de filtrage (10) permet d'appliquer un filtrage antibruit adapté auxdites variables dynamiques du véhicule (Vm, Na, Nd, Ns), ces variables dynamiques étant disponibles sur le bus de communication du véhicule.

12. Dispositif selon la revendication 11, **caractérisé en ce que** les variables dynamiques du véhicule (Vm, Na, Nd, Ns) consistent, notamment uniquement, en de l'information vitesse du véhicule.

13. Dispositif selon l'une des revendication 9 à 12, **caractérisé en ce que** lesdits moyens de détection (1) comprennent un module de pré-traitement (11) connecté au module de filtrage et de formatage (10), cadencé par un signal d'horloge (CLK), ledit module de pré-traitement délivrant, sur chaque durée déterminée successive, les variables dynamiques intrinsèques du véhicule, vitesse moyenne du véhicule (Vm), nombre d'accélérations (Na) et/ou décélération (Nd) du véhicule et nombre d'arrêts (Ns) du véhicule.

14. Dispositif selon l'une des revendications 7 à 13, **caractérisé en ce que** les variables dynamiques intrinsèques du véhicule (Vm, Na, Nd, Ns) sont déterminées à partir de mesures provenant uniquement d'un capteur de vitesse.

15. Dispositif selon l'une des revendications 7 à 14, **caractérisé en ce que** lesdits moyens de codage/décodage (2) en logique floue d'au moins un sous-ensemble de variables dynamiques intrinsèques (Vm, Na, Nd, Ns) déterminées selon au moins une zone de circulation et de trafic détecté du véhicule incluent au moins :
- un module de fuzzification (20a) du sous-ensemble des variables dynamiques intrinsèques du véhicule, par attribution à chaque variable dynamique (Vm, Na, Nd, Ns) détectée d'un état d'entrée relatif et allocation de zones correspondantes de sortie correspondant chacune à un domaine de circulation possible ;
- un module d'inférence floue comportant une base de règles floues (20c) formée par un système de prédicats, les dites règles floues liant l'appartenance des variables dynamiques détectées aux zones correspondantes de sortie par instanciation des prédicats par les états d'entrée relatifs correspondants;
- un module d'agrégation des différentes zones de sortie selon un sous-ensemble solution en logique floue du système des prédicats.

16. Dispositif selon l'une des revendications 7 à 15, **caractérisé en ce que** lesdits moyens de codage/décodage (2) en logique floue comprennent au moins un module de défuzzification (21a) du sous-ensemble valeur floue solution en logique floue du système de prédicats, permettant de transformer ladite valeur floue (ZC) en une valeur physique réelle (DC) représentative du domaine de circulation et de trafic dans lequel évolue le véhicule.

## Patentansprüche

1. Steuerungsverfahren zum Umschalten des adaptativen vorderen Beleuchtungssystems eines Kraftfahrzeugs zwischen verschiedenen Abblendlichtklassen, **dadurch gekennzeichnet, dass** es die folgenden Schritte umfasst:
- Erfassen (A) einer Gesamtheit von intrinsischen dynamischen Parametern (PDi) des Fahrzeugs über mindestens eine bestimmte Dauer; wobei dieser Schritt die Bestimmung von intrinsischen dynamischen Variablen (Vm, Na, Nd, Ns) entweder ausschließlich aus der Geschwindigkeitsinformation des Fahrzeugs oder ausschließlich aus der Geschwindigkeitsinformation des Fahrzeugs und einem Zeitsignal (CLK) umfasst;
- Codieren (B) in Fuzzy-Logik mindestens einer Untereinheit von bestimmten intrinsischen dynamischen Variablen (Vm, Na, Nd, Ns) nach mindestens einem Fuzzy-Wert (ZC), der für ein erfasstes Zirkulations- und Verkehrsgebiet des Fahrzeugs repräsentativ ist;
- Decodieren (C) des mindestens einen Fuzzy-Werts in einen realen Wert (DC) und Steuern des Umschaltens des vorderen Beleuchtungssystems (4, 6, 9) des Fahrzeugs auf eine Abblendlichtklasse (E3, E2, E1, E), die an das erfasste Zirkulations- und Verkehrsgebiet des Fahrzeugs angepasst ist, auf Basis dieses realen Werts.

2. Verfahren nach Anspruch 1, **dadurch gekennzeichnet, dass** die intrinsischen dynamischen Variablen (Vm, Na, Nd, Ns) des Fahrzeugs aus Messungen bestimmt werden, die nur von einem Geschwindigkeitssensor stammen.

3. Verfahren nach einem der Ansprüche 1 bis 2, **dadurch gekennzeichnet, dass** die intrinsischen dynamischen Variablen des Fahrzeugs, über die bestimmte Dauer (T) berechnet, mindestens umfassen:
- die Durchschnittsgeschwindigkeit des Fahrzeugs (Vm);
- die Anzahl von Beschleunigungen (Na) und/oder Verlangsamungen (Nd) des Fahrzeugs;
- die Anzahl von Anhaltungen des Fahrzeugs (Ns).

4. Verfahren nach einem der Ansprüche 1 bis 3, **dadurch gekennzeichnet, dass** dieses kontinuierlich während der Fahrt des Fahrzeugs durch sukzessive Wiederholung der bestimmten Dauern (T) eingesetzt wird.

5. Verfahren nach einem der Ansprüche 1 bis 4, **dadurch gekennzeichnet, dass** der Schritt, der darin besteht, eine Untereinheit von bestimmten intrinsischen dynamischen Variablen in Fuzzy-Logik zu codieren, mindestens umfasst:
- den Aufruf einer Gesamtheit von Prädikaten, die eine Basis von Fuzzy-Regeln (20c) implementieren;
- die Instanziierung der aufgerufenen Prädikate mit Hilfe der erfassten intrinsischen dynamischen Variablen (Vm, Na, Nd, Ns), um die Regeln zu erzeugen;
- die Interpretation der Regeln und ihre Übersetzung nach mindestens einem erfassten, wahrscheinlichsten Zirkulations- und Verkehrsgebiet des Fahrzeugs.

6. Verfahren nach einem der Ansprüche 1 bis 5, **dadurch gekennzeichnet, dass** die Umschaltsteuerung des vorderen Beleuchtungssystems (4, 6, 9) des Fahrzeugs die Auswahl der Abblendlichtklasse (E3, E2, E1, E) umfasst, die in Abhängigkeit von dem erfassten wahrscheinlichsten Zirkulations- und Verkehrsgebiet des Fahrzeugs und der momentanen Geschwindigkeit des Fahrzeugs angepasst ist.

7. Steuerungsvorrichtung zum Umschalten des adaptativen vorderen Beleuchtungssystems eines Kraftfahrzeugs zwischen verschiedenen Abblendlichtklassen (E3, E2, E1, E), **dadurch gekennzeichnet, dass** sie mindestens umfasst:
- Mittel zur Erfassung (1) einer Gesamtheit von intrinsischen dynamischen Parametern (PDi) des Fahrzeugs über mindestens eine bestimmte Dauer (T) mit Hilfe der Bestimmung einer Gesamtheit von intrinsischen dynamischen Variablen (Vm, Na, Nd, Ns) des Fahrzeugs des Fahrzeugs entweder ausschließlich aus der Geschwindigkeitsinformation des Fahrzeugs oder ausschließlich aus der Geschwindigkeitsinformation des Fahrzeugs und dem Zeitsignal;
- Mittel zum Codieren/Decodieren (2) in Fuzzy-Logik, die die Codierung mindestens einer Untereinheit von bestimmten intrinsischen dynamischen Variablen nach mindestens einem Fuzzy-Wert (ZC), der für ein erfasstes Zirkulations- und Verkehrsgebiet des Fahrzeugs repräsentativ ist, und die Decodierung dieses mindestens einen Fuzzy-Werts in einen realen Wert (DC), der für das erfasste Zirkulations- und Verkehrsgebiet des Fahrzeugs repräsentativ ist, ausführen;
- Mittel (3) zum Steuern des Umschaltens des vorderen Beleuchtungssystems (4, 6, 9) des Fahrzeugs auf eine Abblendlichtklasse (E3, E2, E1, E), die an das erfasste Zirkulations-und Verkehrsgebiet des Fahrzeugs angepasst ist, in Abhängigkeit von diesem realen Wert.

8. Vorrichtung nach Anspruch 7, **dadurch gekennzeichnet, dass** die intrinsischen dynamischen Variablen des Fahrzeugs, über die bestimmte Dauer berechnet, einschließen:
- die Durchschnittsgeschwindigkeit des Fahrzeugs (Vm);
- die Anzahl von Beschleunigungen (Na) und/oder Verlangsamungen (Nd) des Fahrzeugs;
- die Anzahl von Anhaltungen des Fahrzeugs (Ns).

9. Vorrichtung nach Anspruch 7 oder 8, **dadurch gekennzeichnet, dass** die Mittel (1) zur Erfassung einer Gesamtheit von intrinsischen dynamischen Variablen (Vm, Na, Nd, Ns) des Fahrzeugs mindestens ein Filter- und Formatierungsmodul (10) der dynamischen Variablen des Fahrzeugs umfassen, wobei dieses Filtermodul dazu bestimmt ist, an den Kommunikationsbus des Fahrzeugs angeschlossen zu sein.

10. Vorrichtung nach Anspruch 9, **dadurch gekennzeichnet, dass** das Filtermodul (10) an den Kommunikationsbus des Fahrzeugs angeschlossen ist.

11. Vorrichtung nach einem der Ansprüche 9 oder 10, **dadurch gekennzeichnet, dass** es das Filtermodul (10) ermöglicht, eine Lärmschutzfilterung anzuwenden, die an die dynamischen Variablen des Fahrzeugs (Vm, Na, Nd, Ns) angepasst ist, wobei diese dynamischen Variablen auf dem Kommunikationsbus des Fahrzeugs verfügbar sind.

12. Vorrichtung nach Anspruch 11, **dadurch gekennzeichnet, dass** die dynamischen Variablen des Fahrzeugs (Vm, Na, Nd, Ns) insbesondere nur in der Geschwindigkeitsinformation des Fahrzeugs bestehen.

13. Vorrichtung nach einem der Ansprüche 9 bis 12, **dadurch gekennzeichnet, dass** die Erfassungsmittel (1) ein Vorbehandlungsmodul (11) umfassen, das an das Filter- und Formatierungsmodul (10) angeschlossen und durch ein Zeitsignal (CLK) getaktet ist, wobei das Vorbehandlungsmodul über jede sukzessive bestimmte Dauer die intrinsischen dynamischen Variablen des Fahrzeugs, Durchschnittsgeschwindigkeit des Fahrzeugs (Vm), Anzahl von Beschleunigungen (Na) und /oder Verlangsamungen (Nd) des Fahrzeugs und Anzahl von Anhaltungen (Ns) des Fahrzeugs liefert.

14. Vorrichtung nach einem der Ansprüche 7 bis 13, **dadurch gekennzeichnet, dass** die intrinsischen dynamischen Variablen des Fahrzeugs (Vm, Na, Nd, Ns) auf Basis von Messungen bestimmt werden, die nur von einem Geschwindigkeitssensor stammen.

15. Vorrichtung nach einem der Ansprüche 7 bis 14, **dadurch gekennzeichnet, dass** die Codierungs-/Decodierungsmittel (2) in Fuzzy-Logik mindestens einer Untereinheit von bestimmten intrinsischen dynamischen Variablen (Vm, Na, Nd, Ns) nach mindestens einem erfassten Zirkulations-und Verkehrsgebiet des Fahrzeugs mindestens einschließen:
- ein Fuzzifizierungsmodul (20a) der Untereinheit von intrinsischen dynamischen Variablen des Fahrzeugs durch Zuteilung zu jeder erfassten dynamischen Variablen (Vm, Na, Nd, Ns) eines relativen Eingangszustands und Zuweisung von entsprechenden Ausgangszonen, die jeweils einem möglichen Zirkulationsgebiet entsprechen,
- ein Fuzzy-Inferenzmodul, umfassend eine Basis von Fuzzy-Regeln (20c), die von einem System von Prädikaten gebildet ist, wobei die Fuzzy-Regeln die Zugehörigkeit der erfassten dynamischen Variablen mit den entsprechenden Ausgangszonen durch Instanziierung der Prädikate durch die entsprechenden relativen Eingangszustände verbinden;
- ein Modul der Aggregation der verschiedenen Ausgangszonen nach einer Untereinheit Lösung in Fuzzy-Logik des Systems der Prädikate.

16. Vorrichtung nach einem der Ansprüche 7 bis 15, **dadurch gekennzeichnet, dass** die Codierungs-/Decodierungsmittel (2) in Fuzzy-Logik mindestens ein Entfuzzifizierungsmodul (21a) der Untereinheit Fuzzy-Wert Lösung in Fuzzy-Logik des Systems von Prädikaten umfassen, das es ermöglicht, den Fuzzy-Wert (ZC) in einen realen physischen Wert (DC) umzuwandeln, der für das Zirkulations- und Verkehrsgebiet, in dem sich das Fahrzeug bewegt, repräsentativ ist.

## Claims

1. Method for controlling the switching of the adaptive front lighting system of a motor vehicle, between various low-beam classes, **characterized in that** it comprises the following steps:
- detecting (A), over at least one determined duration, a set of intrinsic dynamic parameters (PDi) of the vehicle; this step comprising determining intrinsic dynamic variables (Vm, Na, Nd, Ns), either exclusively from information on the speed of the vehicle or exclusively from information on the speed of the vehicle and a clock signal (CLK);
- encoding (B) in a fuzzy-logic language at least one subset of determined intrinsic dynamic variables (Vm, Na, Nd, Ns) using at least one fuzzy value (ZC) representative of a detected traffic domain of the vehicle;
- decoding (C) said at least one fuzzy value into an actual value (DC) and controlling the switching of the front lighting system (4, 6, 9) of the vehicle to a low-beam class (E3, E2, E1, E) suitable for the detected traffic domain of the vehicle, depending on this actual value.

2. Method according to Claim 1, **characterized in that** the intrinsic dynamic variables (Vm, Na, Nd, Ns) of the vehicle are determined from measurements originating uniquely from a speed sensor.

3. Method according to one of Claims 1 to 2, **characterized in that** said dynamic variables that are intrinsic to the vehicle comprise at least, calculated over said determined duration (T):
- the average speed (Vm) of the vehicle;
- the number (Na) of accelerations and/or the number of decelerations (Nd) of the vehicle;
- the number (Ns) of stoppages of the vehicle.

4. Method according to one of Claims 1 to 3, **characterized in that** it is continuously implemented while the vehicle is moving, by successive repetition of said determined durations (T).

5. Method according to one of Claims 1 to 4, **characterized in that** the step consisting in encoding in fuzzy-logic language a subset of determined intrinsic dynamic variables comprises at least:
- calling a set of predicates, implementing a fuzzy rule base (20c);
- instantiating the called predicates by means of the detected intrinsic dynamic variables (Vm, Na, Nd, Ns) in order to generate said rules; and
- interpreting said rules and translating them into at least one most likely detected traffic domain of the vehicle.

6. Method according to one of Claims 1 to 5, **characterized in that** the control of the switching of the front lighting system (4, 6, 9) of the vehicle comprises choosing the suitable low-beam class (E3, E2, E1, E) depending on the most likely detected traffic domain and the instantaneous speed of the vehicle.

7. Device for controlling the switching of the adaptive front lighting system of a motor vehicle between various low-beam classes (E3, E2, E1, E), **characterized in that** it comprises at least:
- means (1) for detecting, over at least one determined duration (T), a set of intrinsic dynamic parameters (PDi) of the vehicle by means of the determination of a set of intrinsic dynamic variables (Vm, Na, Nd, Ns) of the vehicle of the vehicle either exclusively from information on the speed of the vehicle or exclusively from information on the speed of the vehicle and the clock signal;
- fuzzy-logic encoding/decoding means (2), executing the encoding of at least one subset of determined intrinsic dynamic variables using at least one fuzzy value (ZC) representative of a detected traffic zone of the vehicle and decoding this at least one fuzzy value into an actual value (DC) representative of the detected traffic domain of the vehicle;
- means (3) for controlling the switching of the front lighting system (4, 6, 9) of the vehicle to a low-beam class (E3, E2, E1, E) suitable for the detected traffic domain of the vehicle, depending on this actual value.

8. Device according to Claim 7, **characterized in that** said intrinsic dynamic variables of the vehicle include, calculated over the determined duration:
- the average speed (Vm) of the vehicle;
- the number (Na) of accelerations and/or the number of decelerations (Nd) of the vehicle;
- the number (Ns) of stoppages of the vehicle.

9. Device according to Claim 7 or 8, **characterized in that** said means (1) for detecting a set of intrinsic dynamic variables (Vm, Na, Nd, Ns) of the vehicle comprise at least one module (10) for filtering and formatting dynamic variables of the vehicle, this filtering module being intended to be connected to the communication bus of the vehicle.

10. Device according to Claim 9, **characterized in that** the filtering module (10) is connected to the communication bus of the vehicle.

11. Device according to one of Claims 9 and 10, **characterized in that** the filtering module (10) allows anti-noise filtering adapted to said dynamic variables (Vm, Na, Nd, Ns) of the vehicle to be applied, these dynamic variables being available on the communication bus of the vehicle.

12. Device according to Claim 11, **characterized in that** the dynamic variables (Vm, Na, Nd, Ns) of the vehicle consist, in particular uniquely, of information on the speed of the vehicle.

13. Device according to one of Claims 9 to 12, **characterized in that** said detecting means (1) comprise a pre-processing module (11) connected to the filtering and formatting module (10), clocked by a clock signal (CLK), said pre-processing module delivering, over each successive determined duration, the intrinsic dynamic variables of the vehicle, i.e. the average speed (Vm) of the vehicle, the number (Na) of accelerations and/or the number (Nd) of decelerations of the vehicle and the number (Ns) of stoppages of the vehicle.

14. Device according to one of Claims 7 to 13, **characterized in that** the intrinsic dynamic variables (Vm, Na, Nd, Ns) of the vehicle are determined from measurements originating uniquely from a speed sensor.

15. Device according to one of Claims 7 to 14, **characterized in that** said fuzzy-logic means (2) for encoding/decoding at least one subset of determined intrinsic dynamic variables (Vm, Na, Nd, Ns) depending on at least one detected traffic zone of the vehicle includes at least:
- at least one fuzzification (20a) of the subset of intrinsic dynamic variables of the vehicle, by attribution of a relative input state to each detected dynamic variable (Vm, Na, Nd, Ns) and allocation of corresponding output zones each corresponding to one possible traffic domain;
- a fuzzy inference module including a fuzzy rule base (20c) formed by a system of predicates, said fuzzy rules of said rule base determining whether the detected dynamic variables belong to the corresponding output zones by instantiating the predicates with the corresponding relative input states;
- a module for aggregating the various output zones into a fuzzy-logic subset that is a solution of the system of predicates.

16. Device according to one of Claims 7 to 15, **characterized in that** said fuzzy-logic encoding/decoding means (2) comprise at least one module (21a) for defuzzifying the fuzzy-logic fuzzy-value subset solution of the system of predicates, allowing said fuzzy value (ZC) to be converted into an actual physical value (DC) representative of the traffic domain through which the vehicle is moving.
